# FASCICULE DE BREVET EUROPEEN

(11) **EP 0 452 193 B1**
(45) Date de publication et mention de la délivrance du brevet: **23.08.1995**
(21) Numéro de dépôt: 91400906.3
(22) Date de dépôt: 03.04.1991
(51) Int. Cl.: G11B 5/31, G11B 5/147

(54) **Procédés de réalisation d'une tête magnétique d'enregistrement/lecture**
Herstellungsverfahren von einem magnetischen Wiedergabe-Aufzeichnungskopf
Fabrication processes of a magnetic recording/reproducing head

(30) Priorité: 13.04.1990 FR 9004811
(43) Date de publication de la demande: 16.10.1991
(73) Titulaire: THOMSON-CSF, 75008 Paris (FR)
(72) Inventeur: Castera, Jean-Paul, F-92045 Paris la Défense (FR); Coutellier, Jean-Marc, F-92045 Paris la Défense (FR)
(74) Mandataire: Guérin, Michel

(56) Documents cités:
- EP-A- 0 152 064
- EP-A- 0 216 114
- JP-A- 1 013 207
- US-A- 4 601 099
- PATENT ABSTRACTS OF JAPAN vol. 14, no. 158 (P-1027)(4101) 27 mars 1990, & JP-A- 02 014411
- IBM TECHNICAL DISCLOSURE BULLETIN. vol. 21, no. 12, mai 1979, ARMONK,N.Y.,USA page 5002 K. E. PETERSEN: "THIN FILM MAGNETIC HEADS"
- PATENT ABSTRACTS OF JAPAN vol. 11, no. 147 (P-575)(2594) 14 mai 1987, & JP-A- 61 283018
- PATENT ABSTRACTS OF JAPAN vol. 11, no. 305 (P-623)(2752) 06 octobre 1987, & JP-A- 62 097118

## Description

L'invention concerne des procédés de réalisation d'une tête magnétique d'enregistrement/lecture. Plus particulièrement, l'invention est applicable à la technique des têtes magnétiques d'enregistrement/lecture de bandes ou de disques magnétiques de haute technicité utilisées dans les périphériques informatiques pour l'enregistrement et la lecture des bandes et des disques magnétiques. Elle pourrait également être applicable à d'autres types de matériels tels que les magnétophones et les magnétoscopes.

Les têtes magnétiques d'enregistrement/lecture tournantes utilisent aujourd'hui une technologie de type "bulk" (c'est-à-dire une technologie non intégrée). Cette technologie comporte des étapes délicates de polissage et de collage des pôles. L'accroissement de la densité d'enregistrement sur les nouveaux média a nécessité des têtes d'enregistrement plus performantes.

Pour pouvoir écrire des informations de plus en plus petites sur les bandes magnétiques, il est nécessaire d'augmenter leur coercivité. En particulier, pour l'enregistrement d'un signal vidéo numérique de haute définition, on estime que les dimensions du bit élémentaire seront proches de 0,2 »m (dans le sens de défilement de la bande) par 5 »m (largeur de la piste). La bande ME (Métal Evaporé) est aujourd'hui le meilleur candidat pour atteindre ce genre de performances, sa coercivité est proche de 1000 oersteds.

Les têtes magnétiques doivent elles aussi évoluer, en particulier la zone susceptible de saturer, à proximité de l'entrefer, doit être constituée d'un matériau présentant une aimantation à saturation beaucoup plus élevée que celle des ferrites typiquement utilisées (4¶Ms = 5000 Gauss : de façon empirique, on sait qu'il faut typiquement pouvoir atteindre 7 fois la coercivité de la bande dans l'entrefer pour écrire correctement, soit ici 7000 Gauss).

Ces besoins ont compliqué la technologie de réalisation de ces composants.

On a donc vu apparaître sur le marché de nouvelles structures de têtes dont nous donnons ci-dessous les principales caractéristiques.
- Des têtes de type "Metal In Gap" (MIG) dans lesquelles le corps est composé d'un ferrite de Mn-Zn de perméabilité élevé et les pôles sont recouverts d'une couche de sendust (le sendust est un alliage de fer, d'Aluminium et de Silicium). Entre chaque pôle et la couche de sendust qui le recouvre est prévue une couche "d'accord" magnétique intermédiaire de façon à réduire le phénomène d'entrefer secondaire et à conserver une interface sendust/ferrite parallèle à l'entrefer principal. La technologie de réalisation de ces composants a pu être simplifiée au point de devenir très semblable à celle des têtes ferrites bien connue. La présence d'un pseudo-gap à l'interface entre le sendust et le ferrite a nécessité de modifier la structure de cette tête et a donné naissance aux têtes suivantes.
- Des têtes de type TSS (Tilted Sputtered Sendust) beaucoup plus sophistiquées que les précédentes et dans lesquelles le corps principal de la tête est en ferrite, mais les pôles sont constitués d'un matériau magnétique à forte aimantation à saturation (le sendust : 4¶Ms : 12000 Gauss). L'interface sendust/ferrite se comporte aussi comme un entrefer de faible dimension, il est donc nécessaire de l'incliner par rapport à l'entrefer utile pour ne pas obtenir d'interférences destructives sur le signal de lecture. Cette contrainte conduit à une technologie de réalisation très complexe, donc à des coûts importants, et des rendements difficiles à maîtriser.
- Des têtes MIG dont le problème du pseudo-gap est résolu en intercalant, entre le sendust et le matériau ferrite, une couche d'adaptation permettant d'éviter les interférences destructives sur le signal de lecture.

Cependant, ces têtes sont limitées en fréquence (corps en ferrite, courant de Foucault dans le sendust) et leur technologie de type "bulk" est mal adaptée aux pistes étroites.

En effet, pour les fréquences élevées des signaux numériques haute définition auxquelles il est nécessaire de travailler, ces deux premières structures sont mal adaptées :
. le ferrite classique utilisé présente une fréquence de coupure trop basse,
. des courants de Foucault se développent dans le sendust insuffisamment résistif, et sa perméabilité magnétique diminue dramatiquement. Les directions relatives du champ et du plan de dépôt de ces matériaux ne permettent malheureusement pas de laminer le sendust pour diminuer les courants induits.

Un troisième type de têtes a donc été conçu récemment, celle des têtes laminées.
- LTFH (Laminated Thin Film Head) : elles sont constituées d'un empilement de couches minces à forte aimantation découplées les unes des autres par une ou plusieurs fines couches non magnétiques pour empêcher les courants de Foucault de se développer. L'épaisseur totale de l'empilement définit la largeur de la piste écrite. La largeur de l'entrefer est définie par l'épaisseur de la couche non magnétique qui sépare les deux parties de la tête.

L'absence de corps en ferrite et le dépôt de couches magnétiques performantes dans un plan parallèle aux pistes enregistrées permet une utilisation à haute fréquence d'une part et une bonne adaptation à des pistes d'enregistrement étroites, d'autre part. En revanche, la réalisation du gap par le même procédé que la voie "bulk" supprime ce dernier avantage et transforme même cet avantage potentiel des couches minces en un inconvénient majeur. En effet, particulièrement pour les faibles largeurs de pistes, il est très difficile d'aligner correctement les deux parties constituant une telle tête et donc de placer les pôles magnétiques exactement en face l'un de l'autre. Enfin, cette technologie nécessite un traitement final (arrondi) individuel des têtes, donc un coût de fabrication élevé.

Les technologies décrites précédemment nécessitent un traitement des têtes en barrettes, jusqu'à l'arrondi final de chaque tête effectué d'abord sur une barrette, puis tête à tête. Notre proposition permet un traitement collectif (substrat 2 dimensions) jusqu'à l'arrondi final.

L'objet de la présente invention consiste à résoudre ce problème et à utiliser pleinement les avantages liés au dépôt de couches minces : procédé collectif et adéquation parfaite aux pistes étroites. Particulièrement, l'invention permet un alignement automatique extrêmement précis des pôles magnétiques. Par ailleurs, toutes les caractéristiques du dernier type de structure présenté sont conservées.

Le document JP-A-02-014411 décrit une tête magnétique d'enregistrement/lecture comprenant une couche support possédant une face principale et portant, sur cette face principale, deux couches en matériaux magnétiques séparées par une couche d'entrefer en matériau non magnétique en couche mince ou épaisse. Cette couche d'entrefer fait un angle déterminé avec la face principale, un trou traverse la première couche support et les deux couches en matériaux magnétiques de façon à être sécant avec la couche d'entrefer. Lors de la réalisation de cette tête, l'angle que fait l'entrefer avec la face principale est apparemment obtenu avec précision par gravure au moyen d'un faisceau d'ions.

L'invention concerne un procédé de réalisation d'un circuit magnétique pour tête magnétique d'enregistrement/lecture comprenant une première couche support en matériau non magnétique possédant une face principale et portant sur cette face principale deux couches en matériaux magnétiques en couches minces ou épaisses séparées par une couche d'entrefer en matériau non magnétique en couche mince ou épaisse, cette couche d'entrefer faisant un angle déterminé avec la face principale, un trou traversant la première couche support et les deux couches en matériaux magnétiques de façon à être sécant avec la couche d'entrefer ; ledit procédé comportant les étapes suivantes :
a) réalisation d'un substrat monocristallin présentant une face principale orientée selon un angle déterminé par rapport à un axe cristallographique du substrat monocristallin de manière à ajuster un angle prédéterminé de l'entrefer par rapport à la face active de la première couche support ;
b) réalisation d'un masque sur une partie de la face principale ;
c) attaque chimique sélective de la face principale du substrat selon un plan correspondant à l'orientation cristallographique du substrat ;
d) dépôt d'une couche d'entrefer d'un matériau non magnétique ;
e) dépôt d'une première couche d'un matériau magnétique ;
f) usinage de la première couche de matériau magnétique et éventuellement de la couche de matériau non magnétique de façon à obtenir une surface plane ;
g) collage d'une première couche support en matériau non magnétique ;
h) retrait du substrat monocristallin restant ;
i) dépôt d'une deuxième couche d'un matériau magnétique sur la face de la structure laissée libre par le retrait du substrat monocristallin ;
j) perçage d'un trou créant une interruption dans la couche d'entrefer de matériau non magnétique.

L'invention concerne aussi un procédé de réalisation d'un circuit magnétique pour tête magnétique d'enregistrement/lecture comprenant une première couche support en matériau non magnétique possédant une face principale et portant sur cette face principale deux couches en matériaux magnétiques en couches minces ou épaisses séparées par une couche d'entrefer en matériau non magnétique en couche mince ou épaisse, cette couche d'entrefer faisant un angle déterminé avec la face principale, un trou traversant la première couche support et les deux couches en matériaux magnétiques de façon à être sécant avec la couche d'entrefer ; ledit procédé comportant les étapes suivantes :
a) réalisation d'un substrat monocristallin présentant une face principale orientée selon un angle déterminé par rapport à un axe cristallographique du substrat monocristallin de manière à ajuster un angle prédéterminé de l'entrefer par rapport à la face active de la première couche support ;
b) réalisation d'un masque sur une partie de la face principale ;
c) attaque chimique sélective de la face principale du substrat selon un plan correspondant à l'orientation cristallographique du substrat ;
d) dépôt d'une première couche d'un matériau magnétique ;
e) dépôt d'une couche d'entrefer en matériau non magnétique ;
f) dépôt d'une deuxième couche d'un matériau magnétique ;
g) usinage de la deuxième couche de façon à obtenir une première surface ;
h) collage d'une première couche support à la première surface ;
i) retrait du substrat monocristallin ;
j) perçage d'un trou de façon à réaliser une une interruption dans la couche d'entrefer.

Le procédé de gravure d'un substrat monocristallin par attaque chimique sélective selon un plan cristallographique du substrat est connu en tant que tel du document IBM Technical Disclosure Bulletin , Vol. 21, no. 12, Mai 1979.

Les différents objets et caractéristiques de l'invention apparaîtront dans la description qui va suivre et dans les dessins annexés qui représentent :
- les figures 1 à 13, différentes étapes de réalisation d'un procédé de réalisation selon l'invention ;
- les figures 14 à 19, différentes étapes de réalisation d'un autre procédé de réalisation selon l'invention ;
- les figures 20 à 22, une variante de réalisation du procédé de réalisation des figures 14 à 19 ;
- les figures 23 à 24, un exemple de réalisation collectif des têtes magnétiques.

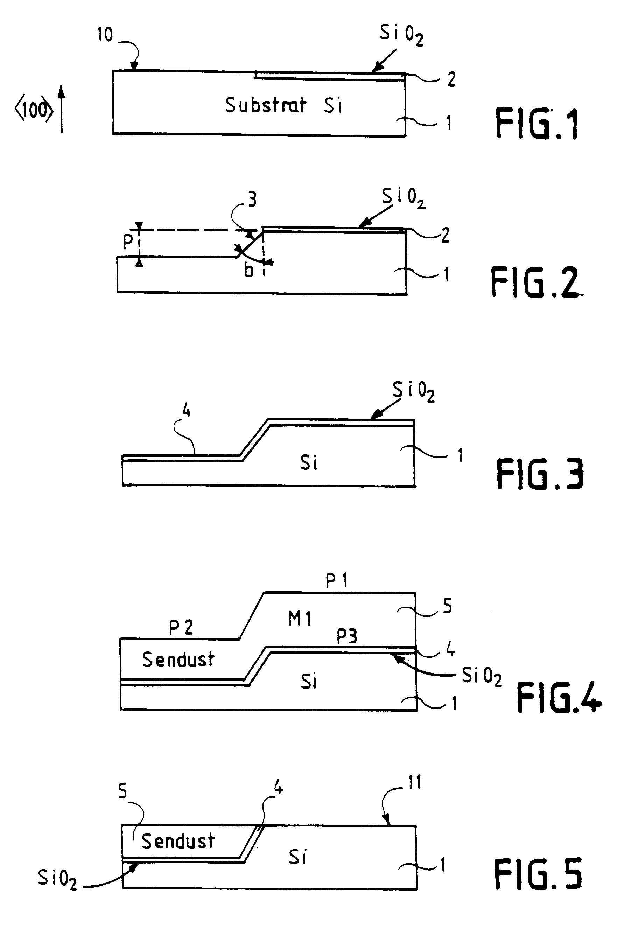

En se reportant aux figures 1 à 13, on va tout d'abord décrire un premier procédé de réalisation d'une tête magnétque d'enregistrement/lecture selon l'invention.

Pour réaliser ce procédé, on dispose d'un substrat 1 en matériau cristallin possédant une face 10 orientée selon un angle déterminé par rapport à un axe cristallographique du substrat. Le substrat est par exemple du Silicium critallin et l'axe cristallographique est <100>.

Sur la face 10 du substrat est réalisé un masque 2 qui protège une partie de la face 10 (figure 1). Par exemple, si le substrat est du Silicium, le masque 2 est réalisé par dépôt d'un matériau insensible à une solution d'attaque du Silicium. De préférence, le masque est alors du SiO₂ obtenu par une oxydation thermique du Silicium du substrat 1.

Au cours d'une étape suivante on procède à une attaque chimique de la face 10 à l'aide d'un produit n'attaquant pas le masque. Selon l'exemple pris du substrat en Silicium et du masque en SiO₂, la solution d'attaque sera une solution de :

NaOH + isopropanol + H₂O

L'attaque chimique se fera selon l'orientation cristallographique du substrat.

Si la face 10 du substrat en Silicium est orientée perpendiculairement à l'axe <100>, l'attaque chimique se fera selon un plan faisant un plan de 54,75° par rapport à la normale à la face 10.

Comme cela est représenté en figure 2, on aura donc une face 3 qui fera un angle b (54,75° par exemple) avec la normale de la face 10.

La profondeur de gravure p du substrat doit correspondre sensiblement à la largeur des pôles magnétiques de la tête magnétique à obtenir (largeur de la partie active de la tête). Par exemple, cette profondeur p est d'environ 5 micromètres.

Au cours de l'étape suivante (figure 3) on dépose une couche 4 d'un matériau non magnétique qui servira de matériau d'entrefer à la tête magnétique. Cette couche peut être obtenue soit par dépôt (en Al₂O₃, SiO₂, ... ) soit par oxydation notamment, dans le cas du Silicium, par oxydation thermique qui conduit à l'obtention d'une couche de SiO₂.

Ensuite, comme cela est représenté en figure 4, on réalise une couche 5 d'un matériau magnétique c'est-à-dire un matériau présentant une forte perméabilité et une aimantation à saturation élevée. Ce matériau est par exemple du sendust qui est un alliage de Fer, d'Aluminium et de Silicium possédant une bonne perméabilité magnétique. L'épaisseur de cette couche est de l'ordre de grandeur de la profondeur p de la gravure précédente.

La structure obtenue présente alors une zone en sur-épaisseur P1 par rapport à la zone P2.

La zone en sur-épaisseur de la couche 5 est alors enlevée, par exemple par polissage. Si l'épaisseur de la couche 5 est inférieure à la hauteur de la marche du substrat (profondeur p), le polissage s'arrête au niveau supérieur de la zone P2 et la couche 4 de la zone P3 est enlevée. Si l'épaisseur de la couche 5 est supérieure à la profondeur p, le polissage est réalisé jusqu'à la couche 4 de la zone P3. Dans ce cas, on peut enlever ou non la couche 4.

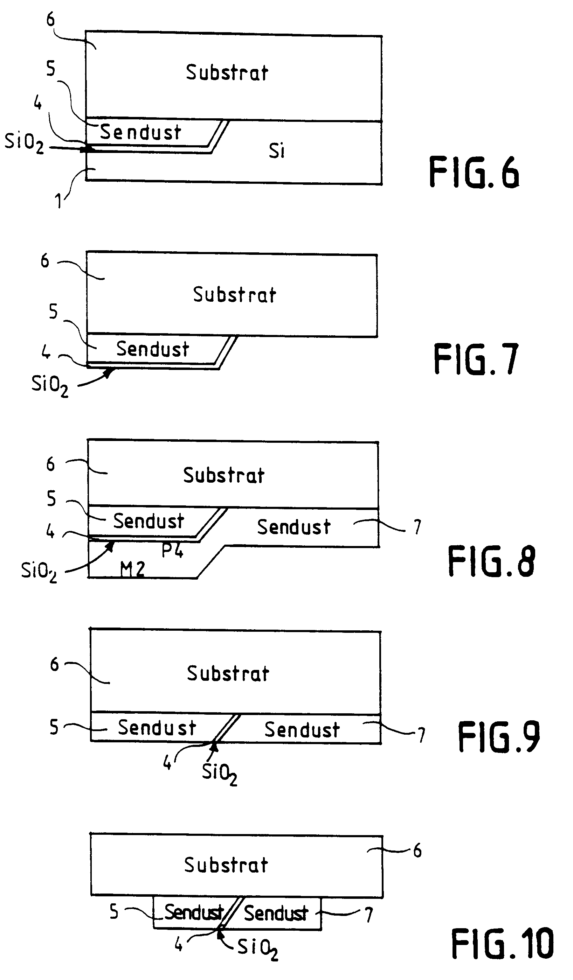

On obtient ainsi la structure de la figure 5 possédant une face 11.

Au cours de l'étape suivante, la face 11 est associée à un substrat ou couche support 6. Par exemple, le substrat est du verre collé à la face 10. Une variante consisterait à déposer une épaisseur importante (15 »m - 30 »m) d'un matériau non magnétique (SiO₂, Al₂O₃, ...), par exemple par sputtering. On obtient la structure de la figure 6.

Ensuite, le substrat 1 est enlevé par attaque chimique isotrope par exemple (figure 7).

Comme cela est représenté en figure 8, une deuxième couche 7 de matériau ayant une bonne perméabilité magnétique, par exemple du sendust est déposée sur la face du substrat 6 comportant les couches 4 et 5. L'épaisseur de cette couche 7 est sensiblement équivalente à l'épaisseur de la couche 5 de matériau magnétique déposée précédemment, soit environ 5 micromètres.

Ensuite la zone en sur-épaisseur de M2 est enlevée, par exemple par polissage. Dans ce cas également, on pourra, selon l'épaisseur de M2, conserver ou non le plan P4 de la couche 4 de SiO₂. On obtient ainsi la structure de la figure 9.

Au cours d'une étape suivante (figure 10), la tête magnétique est usinée de façon à lui donner une forme déterminée. De plus un trou 9 est percé perpendiculairement au plan des couches de façon à interrompre la couche d'entrefer 4.

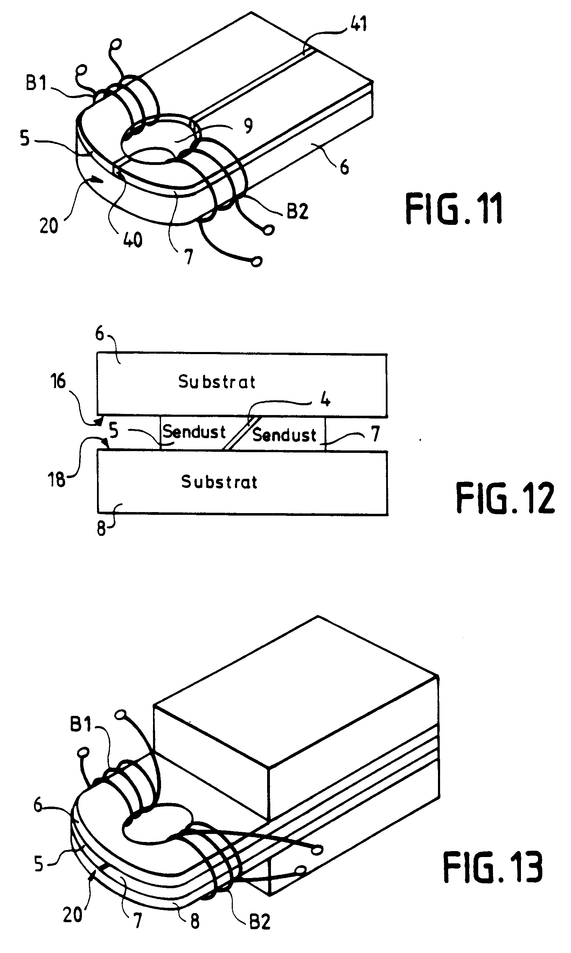

Par exemple, on obtient une tête telle que représentée en figure 11. Dans cette réalisation, le substrat 6 et les couches 5 et 7 ont été usinées en même temps. Une surface 20 de forme courbe, à laquelle affleure la couche d'entrefer 40, constitue la surface active de la tête magnétique qui sera en contact avec le support d'enregistrement (bande magnétique). Le trou 9 interrompt la couche 4. Des bobinages B1 et B2 ont été bobinés par le trou 9 autour des couches 5 et 6. Le flux magnétique émis par les bobinages se refermera par un support d'enregistrement (non représenté) placé à proximité de la surface active 20 et traversera l'entrefer 41 qui en raison de sa longueur ne constituera pas un entrefer gênant pour le fonctionnement de la tête magnétique.

Comme cela est représenté en figure 12, un deuxième substrat 8 (ou couche support) peut être placé du côté opposé au substrat 6 par rapport aux couches magnétiques 5 et 7. Les couches magnétiques 5 et 7 et l'entrefer 4 sont ainsi enserrés entre les faces 16 et 18 des deux pièces support 6 et 8 ce qui permet de protéger ces couches magnétiques et l'entrefer et d'améliorer la solidité de la tête. Ce substrat 8 peut être réalisé comme le substrat 6.

Selon une variante de réalisation de l'invention, dans le cas où les substrat 6 et 8 rapportés sont des couches de matériau non magnétique, d'épaisseur comprise entre 15 et 30 »m, des supports pourront être collés, par exemple avec du verre, de part et d'autre de manière à rendre manipulables les têtes ainsi réalisées. On pourra s'arranger (bien que cela ne soit pas indispensable) pour que le bord de ces supports soit distant de la partie de la tête en contact avec la bande d'au moins plusieurs dizaines de »m comme cela est représenté sur la figure 13.

Pour le bobinage des têtes, une variante consisterait à réaliser un bobinage intégré.

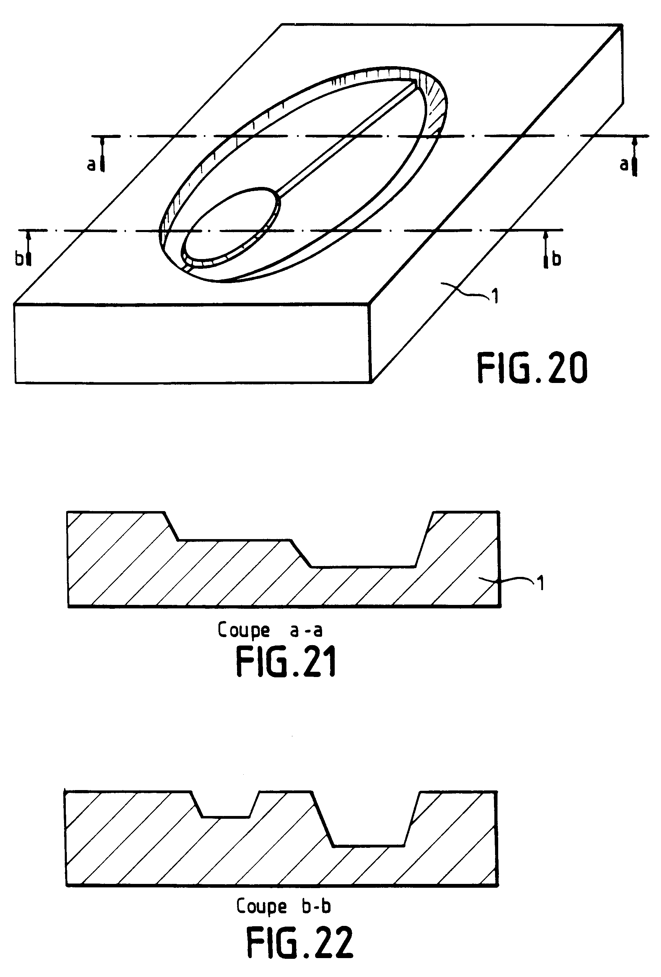

L'étape de gravure de la forme des pôles peut être évitée en incrustant cette forme dans le substrat Silicium initialement préparé tel que cela est représenté sur les figures 20 à 22.

Un tel procédé de réalisation présente les avantages suivants :
- une maîtrise totale de l'azimut et la réalisation d'un gap (entrefer) parfait car défini directement sur la marche de Silicium. Les dimensions du gap sont rigoureusement contrôlées et la qualité des flancs est celle du plan incliné en Silicium. Dans ce mode de réalisation la perfection du gap est indépendante de la profondeur de la marche en Silicium, cette technologie est donc bien adaptée à toute largeur de piste d'enregistrement.
- un dépôt des couches de matériau magnétique sur le même matériau (SiO₂) dans des conditions rigoureusement identiques (angle d'azimut au niveau du gap). La deuxième couche magnétique n'a pas à souffrir, dans le cas présent, des éventuels défauts de la première.

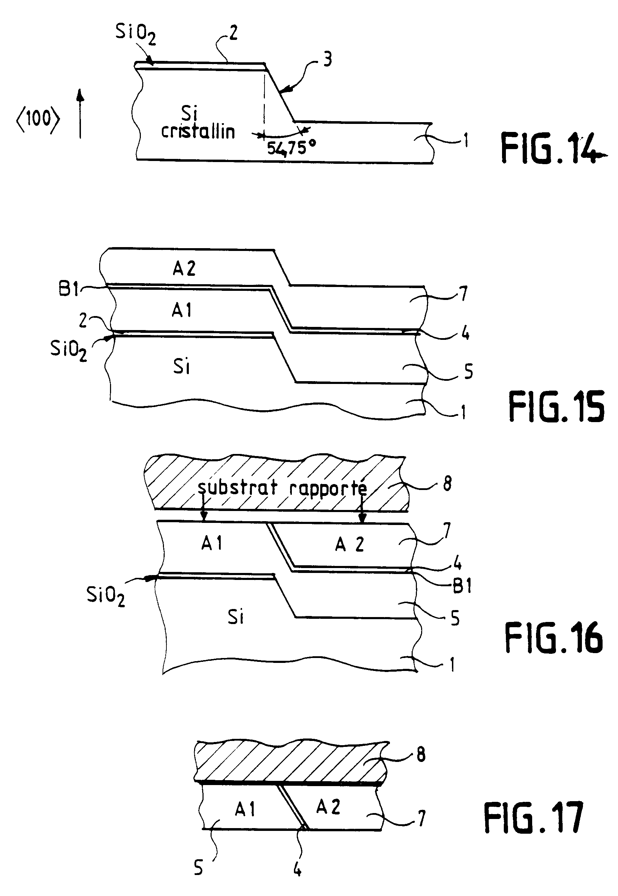

En se reportant aux figures 14 à 19, on va maintenant décrire un autre procédé de l'invention.

Comme précédemment, on dispose d'une plaquette d'un substrat monocristallin convenablement orienté. Par exemple, une plaquette de Silicium monocristallin orientée <100> présente des plans de résistance à l'attaque chimique par une solution de NaOH + isopropanol + eau orientés de 54,75°. On peut donc obtenir des facettes parfaitement définies par masquage d'une partie d'une face du substrat 1 par un masque 2 puis par attaque chimique (figure 14). On obtient une facette 3 faisant un angle déterminé (54,75° par exemple) avec la normale à la face du substrat.

Une désorientation adaptée de l'axe cristallographique de la plaquette conduirait à une facette présentant avec la surface un angle différent, ainsi, une large gamme d'angles peut être obtenue.

Des couches de matériau magnétique ou non peuvent être déposées à la surface de ce substrat gravé, épouser et reproduire parfaitement la forme du substrat.

Selon l'invention, on dépose donc, comme cela est représenté en figure 15, successivement les couches suivantes :
- une couche 5 de matériau magnétique A1, du sendust d'épaisseur typique 5 »m par exemple ;
- une couche 4 de matériau non magnétique B1, de l'alumine Al₂O₃ d'épaisseur typique 0.2 »m par exemple ;
- une couche 7 de matériau magnétique A2, du sendust d'épaisseur typique 5 »m par exemple.

Le dépôt successif des trois couches dans le même bâti permet d'éviter toute source de contamination extérieure :

Les zones en sur-épaisseur de la couche A2 sont enlevées, par exemple par polissage, puis un substrat 8 plan, non magnétique est collé, par exemple avec du verre, sur la surface ainsi polie ( figure 16 ).

Le substrat Silicium 1 d'origine est ensuite retiré, par exemple par attaque chimique isotrope ou par des moyens mécaniques adaptés, ainsi que la partie saillante de la couche 5 de matériau magnétique A1. On obtient ainsi la structure de la figure 17.

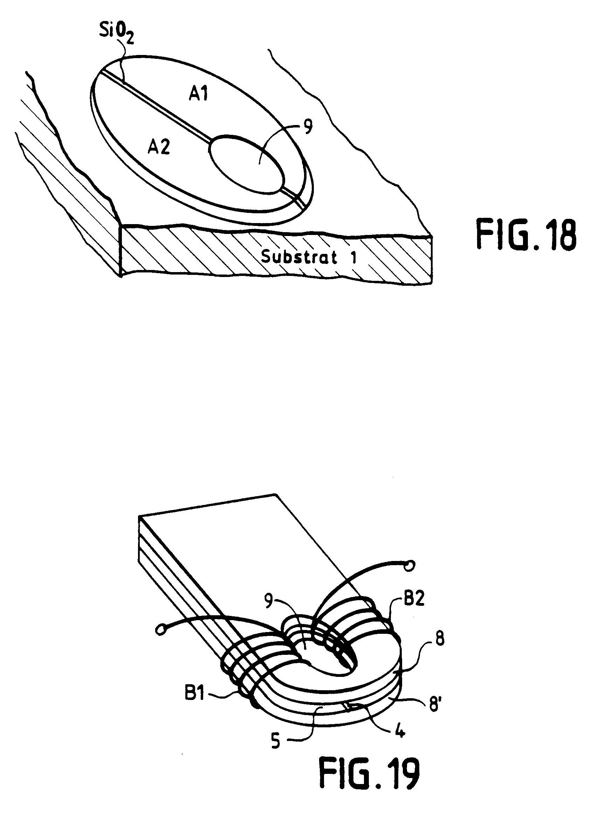

On grave ensuite la surface supérieure comme cela est représenté en figure 18, de manière à définir la forme finale de la structure à obtenir. On peut par exemple utiliser la gravure ionique à travers un masque préalablement mis en place.

Enfin, un second substrat 8′ plan, non magnétique est collé sur cette surface dégagée. Il ne reste plus qu'à percer les trous dans lesquels seront passés les fils des bobinages, à individualiser les têtes à partir de ce substrat, et à arrondir les surfaces au contact de la bande pour obtenir une tête magnétique telle que représenté en figure 19.

Selon une variante, le substrat monocristallin 1 au cours de la première étape est l'objet d'une gravure ionique de façon à former en creux dans le substrat 1, la forme de la tête (figures 20 à 22). Les étapes du procédé sont ensuite celles décrites précédemment. Les pôles sont alors incrustés dans ce substrat monocristallin et il n'y a donc pas de gravure des pôles à faire.

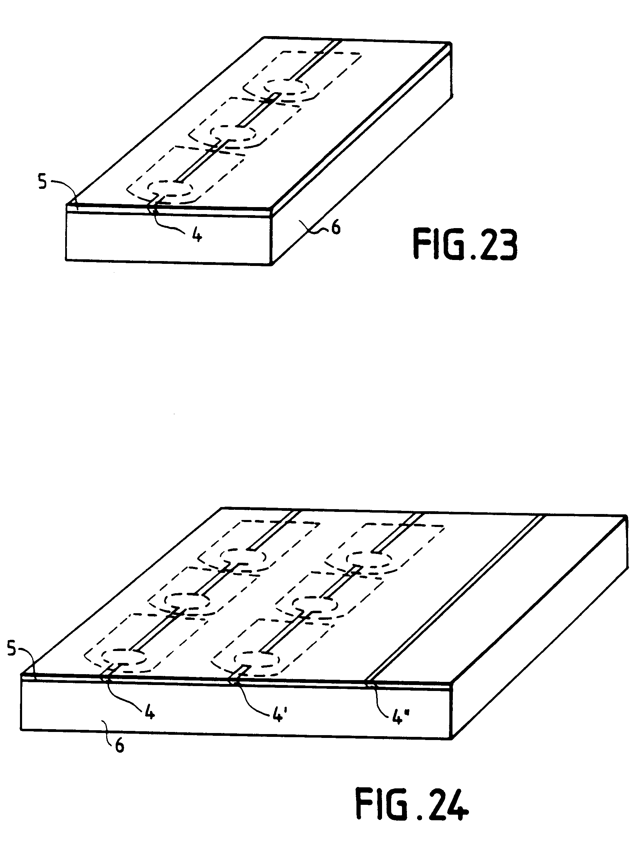

Comme cela a été décrit précédemment en se reportant à la figure 23, un ou plusieurs bobinages peuvent être intégrés à la tête magnétique.

Un tel procédé de réalisation présente les avantages suivants :
- la largeur de piste est définie par la hauteur de la marche gravée dans le Silicium à condition que l'épaisseur des couches magnétiques déposées lui soit au moins égale,
- l'angle d'azimut de l'entrefer réalisé est défini par l'attaque sélective du monocristal utilisé comme support,
- la largeur de l'entrefer est définie avec précision par l'épaisseur de la couche B1 non magnétique déposée,
- on peut s'affranchir de l'étape de gravure de la forme des pôles en incrustant cette forme dans le substrat Silicium correctement préparé.

L'invention concerne donc également une tête magnétique telle que représentée sur les figures 11 et 19. Une telle tête comporte sur un substrat 6 (figure 11), deux couches 5 et 7 en matériaux magnétiques (perméabilité élevée et aimantation à saturation élevée) en couches minces ou épaisses séparées par une couche 4 en matériau non magnétique également en couche mince ou épaisse. La couche 4 (référencée 40 et 41 sur la figure 11) forme un angle déterminé avec la normale au plan des couches 5 et 7. Un trou 9 sépare la couche 4 en deux parties 40 et 41. Le trou 9 permet le bobinage d'enroulements B1 et B2 d'induction de champs magnétiques.

Comme représenté en figure 19, les couches 5 et 7 et la couche de matériau non magnétique 4 (couche d'entrefer) peuvent être enserrées entre deux couches de substrats 8 et 8′.

Ce type de réalisation de tête magnétique s'applique aux têtes magnétiques pour applications informatiques (disque dur, bande, ...).

Il s'applique également à d'autres types de têtes magnétiques tels que :
- tête magnétique vidéo, en particulier pour l'enregistrement des signaux numériques TVDH
- tête multipiste et en général tout type de tête magnétique simple ou multiple pour applications grand-public, professionnelles ou militaires.

Dans les différents procédé décrits précédemment il est également possible de feuilleter les couches 5,7 de matériaux magnétiques en prévoyant un dépôt alterné de matériaux magnétiques et de matériaux isolants, cela pour empêcher le développement de courants de Foucault.

Enfin selon une autre variante de réalisation de l'invention, l'une des couches de substrat accolée aux couches 5 et 7 ou les deux couches (6,8,8′) possèdent une partie en matériau magnétique située sur la partie 41 de la couche d'entrefer. La partie d'entrefer 41 est ainsi court-circuitée magnétiquement.

Pour que ce court-circuit magnétique soit efficace, les procédés de réalisation prévoient alors que la (ou les) couches de substrat (6,8,8′) sont réalisés par dépôts successifs de deux matériaux l'un non magnétique du côté de la partie d'entrefer 40 et l'autre magnétique du côté de la partie d'entrefer 41.

L'invention permet également une réalisation collective des têtes. Dans ce cas, le procédé de réalisation décrit en relation avec les figures 1 à 9 est accompli, puis comme cela est représenté en figure 23, plusieurs têtes magnétiques sont découpées le long de la couche d'entrefer 4. Il est bien évident que le procédé de l'invention permet de réaliser plusieurs couches d'entrefer 4,4′,4˝ parallèles et découpées comme cela est représenté en figure 24 et de découper ensuite, le long de chaque couche d'entrefer, plusieurs têtes magnétiques.

Il convient d'ajouter que la découpe des têtes magnétiques qui vient d'être décrite peut être faite après qu'un deuxième substrat 8 ait été fabriqué comme cela est représenté en figure 16 pour améliorer la solidité des têtes magnétiques.

## Revendications

1. Procédé de réalisation d'un circuit magnétique pour tête magnétique d'enregistrement/lecture comprenant une première couche support (6) en matériau non magnétique possédant une face principale (18) et portant sur cette face principale deux couches (5,7) en matériaux magnétiques en couches minces ou épaisses séparées par une couche d'entrefer (4) en matériau non magnétique en couche mince ou épaisse, cette couche d'entrefer (4) faisant un angle déterminé avec la face principale (18), un trou (9) traversant la première couche support (6) et les deux couches (5,7) en matériaux magnétiques de façon à être sécant avec la couche d'entrefer (4) ; ledit procédé comportant les étapes suivantes :
a) réalisation d'un substrat monocristallin (1) présentant une face principale (10) orientée selon un angle déterminé par rapport à un axe cristallographique (<100>) du substrat monocristallin de manière à ajuster un angle prédéterminé de l'entrefer (4) par rapport à la face active de la première couche support (6) ;
b) réalisation d'un masque (2) sur une partie de la face principale (10) ;
c) attaque chimique sélective de la face principale (10) du substrat selon un plan correspondant à l'orientation cristallographique du substrat ;
d) dépôt d'une couche d'entrefer (4) d'un matériau non magnétique ;
e) dépôt d'une première couche (5) d'un matériau magnétique ;
f) usinage de la première couche (5) de matériau magnétique et éventuellement de la couche (4) de matériau non magnétique de façon à obtenir une surface plane (11) ;
g) collage d'une première couche support (6) en matériau non magnétique ;
h) retrait du substrat monocristallin (1) restant ;
i) d'une deuxième couche (7) d'un matériau magnétique sur la face de la structure laissée libre par le retrait du substrat monocristallin ;
j) perçage d'un trou (9) créant une interruption dans la couche d'entrefer (4) de matériau non magnétique.

2. Procédé de réalisation d'un circuit magnétique pour tête magnétique d'enregistrement/lecture comprenant une première couche support (6) en matériau non magnétique possédant une face principale (18) et portant sur cette face principale deux couches (5,7) en matériaux magnétiques en couches minces ou épaisses séparées par une couche d'entrefer (4) en matériau non magnétique en couche mince ou épaisse, cette couche d'entrefer (4) faisant un angle déterminé avec la face principale (18), un trou (9) traversant la première couche support (6) et les deux couches (5,7) en matériaux magnétiques de façon à être sécant avec la couche d'entrefer (4) ; ledit procédé comportant les étapes suivantes :
a) réalisation d'un substrat monocristallin (1) présentant une face principale (10) orientée selon un angle déterminé par rapport à un axe cristallographique (<100>) du substrat monocristallin de manière à ajuster un angle prédéterminé de l'entrefer (4) par rapport à la face active de la première couche support (6) ;
b) réalisation d'un masque (2) sur une partie de la face principale (10) ;
c) attaque chimique sélective de la face principale (10) du substrat selon un plan correspondant à l'orientation cristallographique du substrat ;
d) dépôt d'une première couche (5) d'un matériau magnétique ;
e) dépôt d'une couche d'entrefer (4) en matériau non magnétique ;
f) dépôt d'une deuxième couche (7) d'un matériau magnétique ;
g) usinage de la deuxième couche (7) de façon à obtenir une première surface ;
h) collage d'une première couche support (8) à la première surface ;
i) retrait du substrat monocristallin (1) ;
j) perçage d'un trou (9) de façon à réaliser une interruption dans la couche d'entrefer (4).

3. Procédé selon la revendication 1, caractérisé en ce qu'il prévoit, après l'étape de dépôt de la deuxième couche de matériau magnétique (7), d'usiner cette deuxième couche (7) de façon à obtenir une surface plane puis, de réaliser sur cette surface plane une deuxième couche support (8) enserrant, avec la première couche support (6), les couches (5,6) de matériaux magnétiques et la couche d'entrefer (4).

4. Procédé selon la revendication 2, caactérisé en ce qu'il prévoit, après l'étape de retrait du substrat monocristallin (1), d'usiner la première couche de matériau magnétique (5) de façon à obtenir une surface plane puis, de réaliser sur cette surface plane une deuxième couche support (8′) enserrant, avec la première couche support (6), les couches (5,6) de matériaux magnétiques et la couche d'entrefer (4).

5. Procédé selon l'une des revendications 1 ou 2, appliqué à la réalisation d'une tête magnétique, caractérisé en ce qu'au moins un enroulement (B1,B2) d'induction de champ magnétique est bobiné par le trou (9) autour d'une couche (5,7) de matériau magnétique.

6. Procédé selon l'une quelconque des revendications 1 ou 2, caractérisé en ce que le substrat monocristallin est du Silicium.

7. Procédé selon l'une quelconque des revendications 1 ou 2, caractérisé en ce que les matériaux magnétiques sont des alliages à base de Fer, d'Aluminium et de Silicium.

8. Procédé selon la revendication 6, caractérisé en ce que le matériau non magnétique de la couche d'entrefer (4) est de l'oxyde de Silicium.

9. Procédé selon l'une quelconque des revendications 1 ou 2, caractérisé en ce que plusieurs circuits magnétiques pour têtes magnétiques sont réalisés sur le même substrat (1) et que ledit procédé prévoit d'usiner plusieurs têtes magnétiques réparties le long de la courbe d'entrefer (4).

10. Procédé selon l'une quelconque des revendications 1 ou 2, caractérisé en ce que plusieurs circuits magnétiques pour têtes magnétiques sont réalisés sur le même substrat (1) et que ledit procédé prévoit de réaliser plusieurs couches d'entrefer (4, 4′, 4˝) parallèles.

## Patentansprüche

1. Verfahren zum Herstellen eines Magnetkreises für einen Aufzeichnungs-/Wiedergabe-Magnetkopf, der eine erste Trägerschicht (6) aus nichtmagnetischem Material enthält, die eine Hauptfläche (18) aufweist und auf dieser Hauptfläche zwei als Dünnschichten oder Dickschichten ausgebildete Schichten (5, 7) aus magnetischen Materialien trägt, die durch eine als Dünnschicht oder Dickschicht ausgebildete Spaltschicht (4) aus nichtmagnetischem Material getrennt sind, wobei die Spaltschicht (4) einen bestimmten Winkel mit der Hauptfläche (18) bildet, wobei ein Loch (9) durch die erste Trägerschicht (6) und die beiden Schichten (5, 7) aus magnetischen Materialien derart hindurchgeht, daß es sich mit der Spaltschicht (4) schneidet, wobei das Verfahren die folgenden Schritte umfaßt:
a) Herstellung eines einkristallinen Substrats (1), das eine Hauptfläche (10) aufweist, die in einem bestimmten Winkel bezüglich einer Kristallachse (<100>)des einkristallinen Substrats ausgerichtet ist, damit ein vorbestimmter Winkel des Spaltes (4) in Bezug auf die aktive Fläche der ersten Trägerschicht (6) eingestellt wird;
b) Herstellung einer Maske (2) auf einem Teil der Hauptfläche (10);
c) selektives chemisches Ätzen der Hauptfläche (10) des Substrats entlang einer Ebene, die der Kristallorientierung des Substrats entspricht;
d) Aufbringen einer Spaltschicht (4) aus einem nichtmagnetischen Material;
e) Aufbringen einer ersten Schicht (5) aus einem magnetischen Material;
f) Bearbeitung der ersten Schicht (5) aus magnetischem Material und eventuell der Schicht (4) aus nichtmagnetischem Material in der Weise, daß eine ebene Oberfläche (11) erhalten wird;
g) Aufkleben einer ersten Trägerschicht (6) aus nichtmagnetischem Material;
h) Entfernen des verbliebenen einkristallinen Substrats (1);
i) Aufbringen einer zweiten Schicht (7) aus einem nichtmagnetischen Material auf die Fläche des Gebildes, die durch das Entfernen des einkristallinen Substrats freigelegt worden ist;
j) Einbringen eines Lochs (9), das eine Unterbrechung der Spaltschicht (4) aus nichtmagnetischem Material verursacht.

2. Verfahren zum Herstellen eines Magnetkreises für einen Aufzeichnungs-/Wiedergabe-Magnetkopf, der eine erste Trägerschicht (6) aus nichtmagnetischem Material enthält, die eine Hauptfläche (18) aufweist und auf dieser Hauptfläche zwei als Dünnschichten oder Dickschichten ausgebildete Schichten (5, 7) aus magnetischen Materialien trägt, die durch eine als Dünnschicht oder Dickschicht ausgebildete Spaltschicht (4) aus nichtmagnetischem Material getrennt sind, wobei die Spaltschicht (4) einen bestimmten Winkel mit der Hauptfläche (18) bildet, wobei ein Loch (9) durch die erste Trägerschicht (6) und die beiden Schichten (5, 7) aus magnetischen Materialien derart hindurchgeht, daß es sich mit der Spaltschicht (4) schneidet, wobei das Verfahren die folgenden Schritte umfaßt:
a) Herstellung eines einkristallinen Substrats (1) das eine Hauptfläche (10) aufweist, die in einem bestimmten Winkel bezüglich einer Kristallachse (< 100 >) des einkristallinen Substrats ausgerichtet ist, damit ein vorbestimmter Winkel des Spaltes (4) im Bezug auf die aktive Fläche der ersten Trägerschicht (6) eingestellt wird;
b) Herstellung einer Maske (2) auf einem Teil der Hauptfläche (10);
c) selektives chemisches Ätzen der Hauptfläche (10) des Substrats entlang einer Ebene, die der Kristallorientierung des Substrats entspricht;
d) Aufbringen einer ersten Schicht (5) aus einem magnetischen Material;
e) Aufbringen einer Spaltschicht (4) aus nichtmagnetischem Material;
f) Aufbringen einer zweiten Schicht (7) aus einem magnetischen Material;
g) Bearbeiten der zweiten Schicht (7) in der Weise, daß eine erste Oberfläche erhalten wird;
h) Aufkleben einer ersten Trägerschicht (8) auf die erste Oberfläche;
i) Entfernen des einkristallinen Substrats (1);
j) Einbringen eines Lochs (9) in der Weise, daß eine Unterbrechung in der Spaltschicht (4) verursacht wird.

3. Verfahren nach Anspruch 1, dadurch gekennzeichnet, daß es vorsieht, nach dem Schritt des Aufbringens der zweiten Schicht (7) aus magnetischem Material diese zweite Schicht (7) derart zu bearbeiten, daß eine ebene Fläche erhalten wird, und dann auf dieser ebenen Fläche eine zweite Trägerschicht (8) auszubilden, die zusammen mit der ersten Trägerschicht (6) die Schichten (5, 6) aus magnetischen Materialien und die Spaltschicht (4) einschließt.

4. Verfahren nach Anspruch 2, dadurch gekennzeichnet, daß es vorsieht, nach dem Schritt des Entfernens des einkristallinen Substrats (1) die erste Schicht (5) aus magnetischem Material derart zu bearbeiten, daß eine ebene Fläche erhalten wird, und dann auf dieser ebenen Fläche eine zweite Trägerschicht (8′) auszubilden, die zusammen mit der ersten Trägerschicht (6) die Schichten (5, 6) aus magnetischen Materialien und die Spaltschicht (4) einschließt.

5. Verfahren nach einem der Ansprüche 1 oder 2, angewendet auf die Herstellung eines Magnetkopfes, dadurch gekennzeichnet, daß wenigstens eine Magnetfeld-Induktionswicklung (B1, B2) durch das Loch (9) um eine Schicht (5, 7) aus magnetischem Material gewickelt wird.

6. Verfahren nach einem der Ansprüche 1 oder 2, dadurch gekennzeichnet, daß das einkristalline Substrat aus Silicium besteht.

7. Verfahren nach einem der Ansprüche 1 oder 2, dadurch gekennzeichnet, daß die magnetischen Materialien, Legierungen auf der Basis von Eisen, Aluminium und Silicium sind.

8. Verfahren nach Anspruch 6, dadurch gekennzeichnet, daß das nichtmagnetische Material der Spaltschicht (4) Siliciumoxid ist.

9. Verfahren nach einem der Ansprüche 1 oder 2, dadurch gekennzeichnet, daß mehrere Magnetkreise für Magnetköpfe auf dem gleichen Substrat (1) gebildet werden und daß das Verfahren vorsieht, mehrere entlang der Spaltschicht (4) verteilte Magnetköpfe zu bearbeiten.

10. Verfahren nach einem der Ansprüche 1 oder 2, dadurch gekennzeichnet, daß mehrere Magnetkreise für Magnetköpfe auf dem gleichen Substrat (1) gebildet werden und daß das Verfahren vorsieht, mehrere parallele Spaltschichten (4, 4′,4˝) herzustellen.

## Claims

1. Method of producing a magnetic circuit for a magnetic read/write head comprising a first support layer (6) made of non-magnetic material, possessing a main face (18) and carrying, on this main face, two layers (5, 7) of magnetic material in thin or thick films separated by a gap layer (4) of non-magnetic material in a thick or thin film, this gap layer (4) forming a defined angle with the main face (18), a hole (9) passing through the first support layer (6) and the two layers (5, 7) of magnetic materials so as to be secant to the gap layer (4), the said method including the following steps:
a) production of a monocrystalline substrate (1) having a main face (10) oriented along a defined angle with respect to a crystallographic axis (<100>) of the monocrystalline substrate so as to set a predetermined angle of the gap (4) with respect to the active face of the first support layer (6);
b) production of a mask (2) on a part of the main face (10);
c) selective chemical attack of the main face (10) of the substrate along a plane corresponding to the crystallographic orientation of the substrate;
d) deposition of a gap layer (4) of a non-magnetic material;
e) deposition of a first layer (5) of a magnetic material;
f) machining of the first layer (5) of magnetic material and possibly of the layer (4) of non-magnetic material so as to obtain a planar surface (11);
g) bonding of a first support layer (6) of non-magnetic material;
h) removal of the remaining monocrystalline substrate (1);
i) deposition of a second layer (7) of a magnetic material on the face of the structure left free by the removal of the monocrystalline substrate;
j) piercing of a hole (9) creating an interruption in the gap layer (4) of non-magnetic material.

2. Method of producing a magnetic circuit for a magnetic read/write head comprising a first support layer (6) made of non-magnetic material, possessing a main face (18) and carrying, on this main face, two layers (5, 7) of magnetic material in thin or thick films separated by a gap layer (4) of non-magnetic material in a thick or thin film, this gap layer (4) forming a defined angle with the main face (18), a hole (9) passing through the first support layer (6) and the two layers (5, 7) of magnetic materials so as to be secant to the gap layer (4), the said method including the following steps:
a) production of a monocrystalline substrate (1) having a main face (10) oriented along a defined angle with respect to a crystallographic axis (<100>) of the monocrystalline substrate so as to set a predetermined angle of the gap (4) with respect to the active face of the first support layer (6);
b) production of a mask (2) on a part of the main face (10);
c) selective chemical attack of the main face (10) of the substrate along a plane corresponding to the crystallographic orientation of the substrate;
d) deposition of a first layer (5) of a magnetic material;
e) deposition of a gap layer (4) of a non-magnetic material;
f) deposition of a second layer (7) of a magnetic material;
g) machining of the second layer (7) so as to obtain a first surface;
h) bonding of a first support layer (8) to the first surface;
i) removal of the monocrystalline substrate (1);
j) piercing of a hole (9) so as to produce an interruption in the gap layer (4).

3. Method according to Claim 1, characterized in that, after the step of deposition of the second layer of magnetic material (7), it provides for machining this second layer (7) so as to obtain a planar surface then, on this planar surface, producing a second support layer (8) sandwiching the layers (5, 6) of magnetic materials and the gap layer (4), with the first support layer (6).

4. Method according to Claim 2, characterized in that, after the step of removal of the monocrystalline substrate (1), it provides for machining the first layer of magnetic material (5) so as to obtain a planar surface, then of producing a second support layer (8′) on this planar surface, sandwiching the layers (5, 6) of magnetic materials and the gap layer (4), with the first support layer (6).

5. Method according to one of Claims 1 or 2, applied to the production of a magnetic head, characterized in that at least one magnetic field induction winding (B1, B2) is wound through the hole (9) around a layer (5, 7) of magnetic material.

6. Method according to either of Claims 1 and 2, characterized in that the monocrystalline substrate is of silicon.

7. Method according to either of Claims 1 and 2, characterized in that the magnetic materials are alloys based on iron, aluminium and silicon.

8. Method according to Claim 6, characterized in that the non-magnetic material of the gap layer (4) is silicon oxide.

9. Method according to either of Claims 1 and 2, characterized in that several magnetic circuits for magnetic heads are produced on the same substrate (1) and that the said method makes provision for machining several magnetic heads distributed along the gap layer (4).

10. Method according to either of Claims 1 or 2, characterized in that several magnetic circuits for magnetic heads are produced on the same substrate (1) and that the said method makes provision for producing several parallel gap layers (4, 4′, 4˝).
